# EUROPEAN PATENT APPLICATION

(11) **EP 2 098 974 A2**
(43) Date of publication of application: **09.09.2009**
(21) Application number: 09250603.9
(22) Date of filing: 03.03.2009
(51) Int. Cl.: G06F 21/00

(54) **Digital rights management client system, method thereof, and digital rights management system**

(30) Priority: 04.03.2008 CN 200810083267
(71) Applicant: Sony (China) LTD, North Road, East Third Ring Chao Yang District Beijing 100027 (CN)
(72) Inventor: Zhang, Zhihui, Beijing 100080 (CN)
(74) Representative: Turner, James Arthur

(57) **Abstract**

A DRM client system and a method thereof as well as a DRM system applying the DRM client system are provided. The DRM client system comprises at least one application plug-in module, for generating a DRM client processing request according to a user's request or an external application system's request; and a DRM information processing module for receiving digital data and decrypting the received digital data, in response to the DRM client processing request from the application plug-in module, wherein the DRM information processing module determines and selects a DRM rule to be adopted according to the contents of the DRM client processing request and the digital data and executes a corresponding decryption operation on the digital data according to the selected DRM rules. According to the present invention, a uniform DRM platform can be provided for all existing DRM systems and enables any application systems to have DRM functions through the DRM client system (the uniform DRM platform) and the method thereof according to the present invention.

## Description

The invention relates to a digital rights management system and to a client system for digital rights management (DRM).

DRM is a short name for Digital Rights Management, the object of which is to protect digital products from being illegally used. It provides a whole implementation for the commercial application of the digital media. The DRM technology makes a copyright owner do not need to spend a lot of time and energy negotiating with the clients, so as to ensure the digital media contents to be legally used. DRM will make content providers of various platforms, such as Internet, streaming media, interactive digital TV, provide more contents, use more flexible selling manners for programs, and protect the intellectual property more effectively.

DRM does not only refer to the rights protection, but also provide a whole solution for transmitting, managing, and distributing the digital media contents, so DRM is a systematical concept, which includes the use of the digital rights information, the management and the distribution of the digital media contents protected by rights. Thus, many big companies and organizations make an effort to propose usable and universal DRM system solutions.

The existing DRM system includes a DRM client system, mainly having the following functions of: downloading DRM-protected files, downloading a license, separating the license to check the user's right, obtaining a decryption key from the license, decrypting the DRM-protected files, using the decrypted files, and so on. The particular structure and specification of an existing DRM system are disclosed in "DRM Architecture. Approved Version 2.0", March 3, 2006, "DRM Rights Expression Language. Approved Version 2.0", March 3, 2006, "DRM Specification. Approved Version 2.0", March 3, 2006 and "DRM Content Format. Approved Version 2.0", March 3, 2006, downloaded from http://www.openmobilealliance.org/realease program/drm v2 0.html, which is incorporated herein by reference.

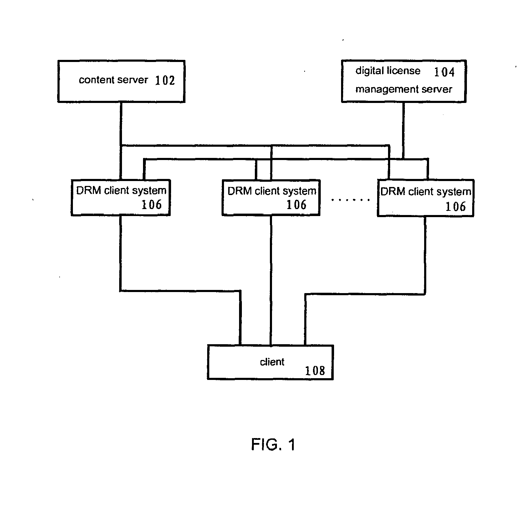

Fig. 1 is a block diagram of a content providing system in the related art. In Fig.1, said content providing system includes a content server 102 for storing and transmitting digital contents (such as digital videos and audios) protected by the Digital Right; a digital license management server 104 for storing and transmitting the Digital Right stored therein; a plurality of DRM client system 106 for receiving the Digital Right and the contents protected by the Digital Right and managing and distributing the Digital Right and the digital contents protected by them; and a client 108 for storing and reproducing the digital contents which are allowed to be used.

As shown in Fig.1, the workflow of the content providing system including a plurality of existing DRM clients 106 is as follows:
When a user (client 108) is going to use a file from the content server 102, the DRM client system 106 first checks whether the current file is protected by DRM, and if no, it allows the user to directly use the file; if yes, it locally searches for a digital license; and if the digital license is not found, it informs the user of having to buy a right for using it. The user applies for the digital license from the digital license management server 104, and after the license is obtained the DRM client system 106 will read the license right information to verify whether the user has the right to use the DRM-protected content. If the user passes the verification, the DRM client system 106 will separate the digital license to get a decryption key. Then, the DRM client system 106 uses the decryption key to decrypt the protected content. The client 108 (user) can normally use the decrypted content. Sensitive data in the digital license, such as user's personal information, decryption keys, and so on are all encrypted and protected, which can be correctly read and used only by being decrypted with the corresponding key.

However, the existing DRM systems have some defects. Firstly, since the DRM has no unified standard, and each company is doing its own DRM system, and each company will develop corresponding DRM clients for its DRM system, this will increase the difficulty and the workload for the development. And since different companies repeatedly develop decryption algorithms in their own DRM clients, this will waste a lot of resources. In addition, the existing DRM systems have a poor universality, and each company has its own DRM system, which brings a big inconvenience to users. Meanwhile, the spread of the products is highly limited. In addition, the DRM client stores the digital licenses in a common storage unit in a local computer, and this storing neither is safe at all, nor can prevent the computer from copying and repeatedly using them. Further, the decryption keys are easily to be exposed during the decryption process, and once the decryption keys are exposed, the DRM-protected files are no longer safe, and may be arbitrarily spread and used.

In view of such a circumstance, the invention is proposed to implement a safe (or at least a safer) DRM client system and method based on TPM.

Various respective aspects and features of the invention are defined in the appended claims.

Embodiments of the invention can provide a system and a method capable of providing a unified interface and a unified processing support for all the DRM systems and the standards.

According to an aspect of the invention, there is provided a DRM client system comprising: at least one application plug-in module, for generating a DRM client processing request according to a user's request or an external application system's request; and a DRM information processing module for receiving digital data and decrypting the received digital data, in response to the DRM client processing request from the application plug-in module, wherein the DRM information processing module determines and selects a DRM rule to be adopted according to the contents of the DRM client processing request and the digital data and executes a corresponding decryption operation on the digital data according to the selected DRM rules.

Further, according to a further aspect of the invention, the DRM client system further comprises a storage medium which includes a TPM module for executing the decryption operation. The TPM module includes a protected storage unit for safe storage of the license and a decryption unit for selecting a supported decryption algorithm according to the specific DRM client processing request and the selected DRM rules to execute the decryption operation.

According to another aspect of the invention, there is provided a method for DRM client, comprising steps of: generating a DRM client processing request according to a user's request or an external application system's request; and receiving digital data and decrypting the received digital data in response to the DRM client processing request, wherein various DRM rules to be adopted are determined and selected according to the contents of the DRM client processing request and digital data and the corresponding decryption operation on the digital data is executed according to the selected DRM rules.

According to another aspect of the invention, there is provided a DRM system which applies a DRM client system of the invention, comprising: a digital content server for distributing a digital DRM-protected content; a license management server for managing and providing digital licenses; an e-business system for charging users for fees and notifying the license management server to generate a digital license for the user who has been charged; and DRM client system for executing DRM client management, wherein the DRM client system comprises: at least one application plug-in module, for generating a DRM client processing request according to a user's request or an external application system's request; and a DRM information processing module for receiving digital data and decrypting the received digital data, in response to the DRM client processing request from the application plug-in module, wherein the DRM information processing module determines and selects a DRM rule to be adopted according to the contents of the DRM client processing request and the digital data and executes a corresponding decryption operation on the digital data according to the selected DRM rules.

According to the DRM client system and method of the invention, a unified processing platform can be provided for all the DRM systems and the standards, and the DRM client system according to the invention can make every application system have a DRM function.

Since the DRM information processing module interacts with the independently working application plug-in module and the DRM information processing module analyzes the information obtained during the interactive process to select at least one DRM rule, the DRM client system and the method of the invention have a strong universality, and thus it is not necessary to develop corresponding DRM systems for the different application systems, but it is only necessary to develop a corresponding application plug-in, which is helpful for developing and spreading the DRM and meanwhile decreasing the cost of the DRM.

Further, the DRM client system and the method of the invention further provide a TPM module capable of preventing the licenses from being illegal copied by ensuring the safety of the licenses with the hardware, and the whole decryption process can be performed in the TPM module, so that the decryption key is not easily exposed. In addition, in the case where the decryption is performed by the TPM, the decryption can be performed not in the DRM information processing module, so as to decrease the burden of the system and the repeatedly developing.

Embodiments of the invention will now be described, by way of example only, with reference to the drawings where the same reference number indicates the same element, in which:
Fig.1 is a block diagram of a content providing system applying an existing DRM system;
Fig.2A-Fig.2D are detailed schematic diagrams of a DRM client system of the embodiment of the invention, respectively;
Fig.3 is a flowchart of a method for obtaining a digital license according to an embodiment of the invention;
Fig.4 is a flowchart of a processing method of a DRM client system according to an embodiment of the invention;
Fig.5 is a schematic diagram for integrating the invention with the application system; and
Fig.6 is a structural diagram for integrating the invention with the DRM system.

In order to make the objects, the technical solution and the advantages of the invention more apparent, the embodiments of the invention will be further described in detail with reference to the drawings.

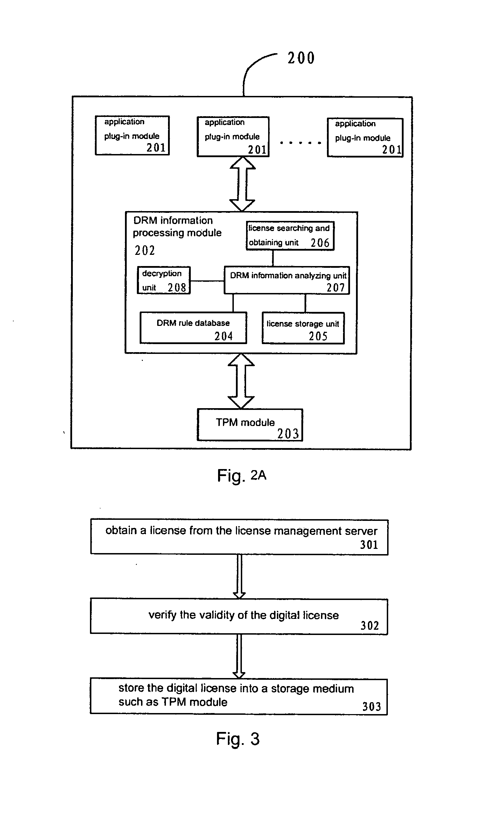

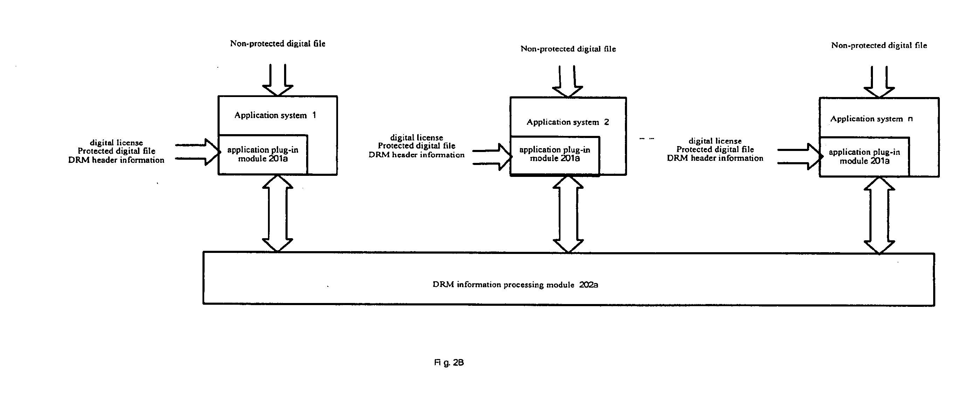

Fig.2A is a schematic diagram of the DRM client system 200 according to an embodiment of the invention, while Fig.2B-Fig.2D illustrate the implementations of the application plug-in module 201 and the DRM information processing module of the DRM client system 200 of the embodiment of the invention, respectively.

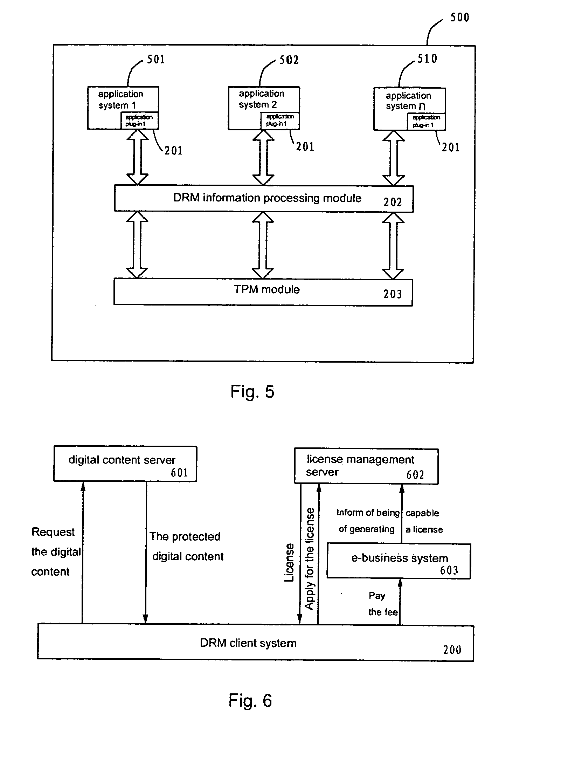

As shown in Fig.2A, the DRM client system 200 includes at least one application plug-in module 201, a DRM information processing module 202, and a storage medium such as a trusted platform module (TPM) 203, wherein the application plug-in module 201 can be embedded into the corresponding application system (as shown by the application system 1 to application system n in Fig.3A-Fig.3C and Fig.6 to be-described).

The at least one application plug-in module 201 each works independently of the DRM information processing module 202 as described below, and each application plug-in module 201 can be embedded into one application system so that the application system has a DRM function. And the DRM information processing module 202 and the corresponding application system are coupled through the corresponding application plug-in module 201. Here, the number of the application plug-in modules 201 corresponds to the number of the application systems.

As shown in Fig.2B, the included application plug-in module 201a and the DRM information processing module 202a are the implementations of the application plug-in module 201 and the DRM information processing module 202 in the DRM client system 200 as shown in Fig.2A, respectively.

In Fig.2B, the application plug-in module 201a can apply for a digital license from a digital license management server (not shown), apply for a protected digital file from a content server (not shown) according to the user's request, receive the digital license from the digital license management server, receive the digital file from the content server, and can transmit the digital license and the digital file to the DRM information processing module 202a, wherein the protected digital file includes a DRM content header.

In Fig.2B, the DRM information processing module 202a receives a DRM client processing request including a DRM header information from the application plug-in module 201a and a protected digital file, and executes the protection of the digital right according to the received DRM client processing request. In particular, the DRM information processing module 202a communicates with the application plug-in module 201a, analyzes the DRM header information of the DRM-protected content, determines the information such as the used DRM standard, adopted DRM format, DRM content identifier ID, encryption algorithm identifier and so on, and it is responsible for analyzing the digital license to verify the user's right, obtaining the decryption key, and decrypting the protected digital file. And the DRM information processing module 202a returns the result to the application plug-in module 201a after the above processes, while the application plug-in module 201a coordinates the right protection process according to the process result of the DRM information processing module 202a, so as to transmitting the protected digital content to the corresponding application system for use.

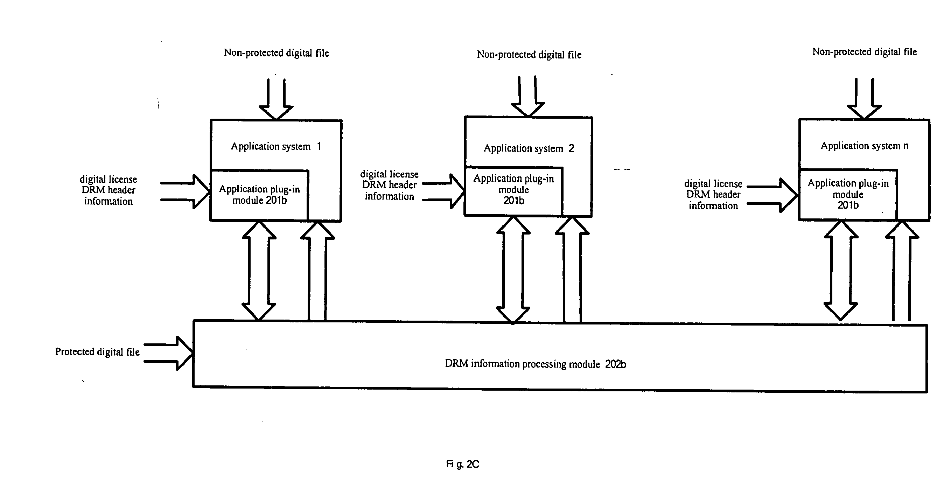

As shown in Fig.2C, the included application plug-in module 201b and the DRM information processing module 202b are the implementations of the application plug-in module 201 and the DRM information processing module 202 in the DRM client system 200 as shown in Fig.2A, respectively. In particular, as shown in Fig.3B, the application plug-in module 201b can apply for and receive the digital license only from the digital license management server, and apply for and receive the DRM header information of the protected digital file only from the content server, without applying for and receiving the protected digital file itself. The protected digital file can be applied for and received by the DRM information processing module 202b itself directly from the content server. In this case, after processing the received data, the DRM information processing module 202b does not need to return the process result to the application plug-in module 201b, but directly decrypts the protected digital content according to the process result, and transmits the decrypted digital file to the corresponding application system for use.

Thus, the application plug-in module 201b does not need to coordinate the right protection process according to the process result of the DRM information processing module 202b, so the structure of the application plug-in module 201b can be further simplified, thereby reducing the cost of the application system.

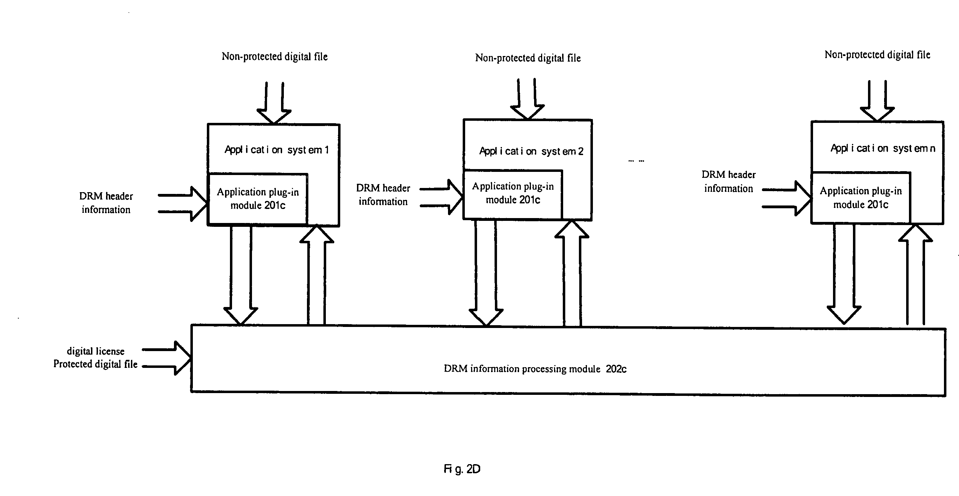

In addition, as shown in Fig.2D, the included application plug-in module 201c and the DRM information processing module 202c are the further implementations of the application plug-in module 201 and the DRM information processing module 202 in the DRM client system 200 as shown in Fig.2A, respectively. According to the implementation of the invention, the application plug-in module 201c can apply for and receive the DRM header information of the protected digital file only from the content server, while the DRM information processing module 202c itself applies for and receives the digital file directly from the content server, and applies for and receives the digital license from the digital license management server. In this case, the application plug-in module 201c transmits the DRM client processing request including the DRM header information of the protected digital file to the DRM information processing module 202c according to the demand. The DRM information processing module 202c does not need to return the process result to the application plug-in module 201c after processing the received data, but directly decrypts the protected digital content according to the process result, and transmits the decrypted digital file to the corresponding application system for use.

The application plug-in module 201a-201c and the DRM information processing module 202a-202c according to embodiments of the invention have similar structure and functions except the above differences. Below, in the case where the differences can be not added, the application plug-in module 201a-201c and the DRM information processing module 202a-202c can be considered as the application plug-in module 201 and the DRM information processing module 202 as shown in Fig.2A.

Return to see Fig.2A, according to the user's request or an external application system's request, the application plug-in module 201 can additionally determine whether the digital content to be used by the user is protected by DRM. If the digital content is not protected, the digital content is directly received by the application system for use, while if the digital content is protected by the DRM, the application plug-in module 201 generates the DRM client processing request and sends it to the DRM information processing module 202, wherein, the DRM client processing request includes the DRM header information of the protected digital file.

In Fig.2A, in the procedure where the DRM information processing module 202 processes the received data, the DRM information processing module 202 receives the DRM client processing request including the DRM header information from the application plug-in module 201, and executes the digital right protection according to the received DRM client processing request. In particular, the DRM information processing module 202 analyzes the DRM header information of the DRM-protected content by itself or by communicating with the application plug-in module 201, and determines the information such as the used DRM standard, the adopted format of the DRM, the ID of the DRM content, the identifier of the encryption algorithm, and meanwhile it is responsible for analyzing the digital license to verify the user's right and obtain the decryption key. Further, after the above processes, the DRM information processing module 202 coordinates the right protection process according to the process result, in order to transmit the protected digital content to the corresponding application system for use.

Since the particular structure of the application plug-in module 201 in the above DRM client system is well-known to the person skilled in the art, a further description of the details thereof is omitted in the present specification. According to embodiments of the invention, for different application systems, only different application plug-in modules 201 are needed to be developed, or for different application systems applying the same DRM rule, only one application plug-in module 201 is needed to be used, without independently developing DRM systems.

It should be noted that the application plug-in module 201 is not limited to the computer plug-in module described here, but also includes different application plug-ins implemented based on the computer plug-in technology and applied to various application systems.

In the embodiment of the invention, for all the application systems, the same one DRM information processing module 202 is used, so the DRM information processing module provides a unified processing interface for all the DRM systems and can support all the DRM system, thereby having universality.

In particular, according to an embodiment of the invention, the DRM information processing module 202 includes a DRM rule database 204, a license storage unit 205, a license searching and obtaining unit 206, a DRM information analyzing unit207 and a decryption control unit 208.

As shown in Fig.2A, the DRM rule database 204 in the DRM information processing module 202 stores a plurality of DRM rules and related information related to the DRM rules, such as DRM formats, decryption algorithms, wherein the DRM rules are used to define DRM formats of different DRM systems, adopted decryption algorithms, and corresponding operations. Well-known DRM rules are for example, WMRM of Microsoft (registered trademark), iTunes Fairplay of Apple (registered trademark), Secure Digital Container (SDC), Advanced Access Content System (AACS) and so on.

In addition, the digital license storage unit 205 in the DRM information processing module checks the format of the digital license by using the DRM information analyzing unit 207 and verifies whether the used right description language is legal to store the digital license. If the verification is passed, the digital license can be imported into the storage medium such as the trusted platform module (TPM) 203, to be stored.

In addition, the digital license searching and obtaining unit 206 searches whether the current user has obtained the corresponding license, according to the specific DRM content, and obtain the searched license from the storage medium such as TPM module.

In addition, the DRM information analyzing unit 207 receives the digital license and the DRM content header of the protected digital file in response to the DRM client processing request from the application plug-in module 201 and analyzes the digital license and the DRM content header of the protected digital file included in the DRM client processing request according to the DRM client processing request. The DRM information analyzing unit 207 analyzes the DRM content header of the protected digital file. The DRM information analyzing unit 207 further obtains the format of DRM, the ID of the DRM file, the format adopted by the content, and the identifier of the encryption algorithm from the DRM content header, the information about verifying whether the format is legal and the information about whether the encryption algorithm is supported, and determines the standard adopted by the DRM file according to these information (for example, by matching these information and the corresponding information stored in the DRM rule database), to realize different DRM systems by invoking at least one method in the DRM rules from the DRM database, according to the information such as the format of DRM. In addition, the DRM information analyzing unit 207 further analyzes the related information in the digital license, so as to obtain which right description language is used by the digital license, verify whether the right description language is legal, obtain the right information, and verify the validity of the current operation of the user to obtain the decryption key.

At last, the DRM information processing module 202 uses the decryption control unit 208 to coordinate other units. In particular, the decryption control unit 208 determines successive operations to be adopted, i.e., whether to decrypt the digital content, according to the DRM client processing request from the application plug-in module 201 and the information analyzed by the DRM information analyzing unit 207. And if decrypting the digital content, the decryption is performed correspondingly to the DRM rule determined by the DRM information analyzing unit 207. Note that, in the case where the storage medium is the TPM module 203 as described below, the decryption control unit 208 does not perform the decryption, but deliveries the encrypted text to the trusted platform module (TPM) 203 to implement the decryption.

It should be noted that, the format of the DRM content header and the method for obtaining related information from the DRM content header are well-known to the person skilled in the art, and the details can be obtained from the related documents which are downloaded from http://www.openmobilealliance.org/realease program/drm v2 0.html, which is incorporated herein by reference and thus are omitted here.

It is described below the functions of the trusted platform module (TPM) 203 of the DRM client system 200. In fact, the TPM module 203 is a trusted module implemented according to the TCG1.2 and above standards. The TPM module 203 executes the operations of the license such as the protected storage and the data decryption. According to the TCG standard, the TPM module 203 has a protected storage area inside which is responsible for storing the licenses. Further, the TPM module has a plurality of encryption and decryption algorithm therein, and supports the encryption and decryption functions based on the standard algorithms and the encryption and decryption functions of the customized encryption and decryption algorithms.

Now the structure and the function of the TPM module 203 is described. The TPM module 203 includes a protected storage unit (unshown) for safe storage of the licenses, and a decryption unit (unshown). The protected storage unit is a storage unit capable of effectively resisting tamper, and the data saved in the protected storage unit may be plaintext or ciphertext, but all the reading and updating operations are performed under an effective access controlling mechanism. That is to say, all the operations on the protected storage unit are performed based on the successful verification between the external application system and the TMP module.

The protected storage unit is normally divided into two kinds according to the operation function, in which one is a storage unit for only accepting the updating operation but not accepting the reading operation; while the other is a storage unit for supporting either the updating operation or the reading operation. The storage unit for only accepting the updating operation is responsible for storing the information such as a device root key, a device key or a device license and so on which information normally is written before the device is put into use. This kind of information will join in the verification, encryption/decryption operation in the trusted module, but because there is no interface for reading, the key value itself will not be exposed out of the trusted module. The related information in the other storage unit for either supporting the updating operation or the reading operation can be read out, but the security verification should be passed before the reading. If the verification is not passed, the stored data can not be correctly read out. Thus, the data in the protected storage unit can not be arbitrarily operated, thereby the protected storage unit has some features such as impossible copying, impossible listening, impossible interfering and being irrespective of the format, thereby realizing the security protection on the license. And the decryption unit in the TPM module 203 selects the supported decryption algorithm according to the specific DRM client processing request and the selected DRM rules to execute a decryption operation.

Normally, the TPM module 203 has its dedicated key stored therein. For example, the dedicated key can be generated by the TPM itself or assigned when manufacturing the TPM. According to the TPM standard, the dedicated key can not be visited or updated. In addition, other keys are stored in the TPM module, and these keys are stored in the TPM module 203 as high-security information, and the TPM module 203 uses these keys to encrypt the information. For example, if the DRM information processing module 202 hopes to import the digital license into the TPM module 203, and firstly, the both should be verified therebetween, and then the both will perform a key agreement, so that the both have a session key. The DRM information processing module 202 can encrypt the digital license by the session key and import the digital license into the TPM module, but the TPM module can not transmit the above information to the DRM information processing module 202. Therefore, the digital content stored in the TPM module 203 can not be arbitrarily accessed, and the TPM module has a higher security as compared with the ordinary storage medium.

In addition, in the case where the storage medium is a TPM module, the decryption is performed by the TPM module, without being performed on the decryption control unit 208 side. The reason why the decryption is perform by the TPM module 203 but not the decryption control unit 208 side is that the TPM module has a very high security, and it will waste the system resources if the decryption is performed by both of the TPM module 203 and the decryption control unit 208. The input of the TPM module is an encrypted digital content, but after decrypting the key, its output is a digital content plaintext which can be played or processed by the application system.

Although in the above embodiments, the DRM system includes the TPM module 203, the invention is not limited to this, and the DRM system according to the embodiments of the invention can use any storage medium (such as hard disk, USB disk), and the decryption operation performed in the TPM module can also be performed in the decryption control unit 208 in the DRM information processing module 202. It should be noted that, since the particular operations such as the decryption on the digital content, as well as the particular structure and functions of the TPM module 203 are well-known to the person skilled in the art, the detailed description thereof is omitted here, and this is because the unnecessary details will confuse the inventive point of the invention and its embodiments.

In addition, the embodiments of the invention can also be applied to the Chinese TCM standard (for the particular content of the Chinese TCM standard, see http://www.oscca.gov.cn/Doc/2/News 1134.htm).

The process for obtaining the digital license will be described below with reference to Fig.3.

Fig.3 is a flowchart of the method for obtaining the digital license according to an embodiment of the invention. At step S301, after the user pays the fee, the license management server will generate a corresponding digital license for the user, and the digital license will be downloaded to the local machine by the application plug-in module 201 or the DRM information processing module 202 , wherein the digital license includes a description regarding the format of the DRM and a content related to the decryption key.

Then, at step S302, after the DRM information processing module 202 received the digital license from the application plug-in module 201 or directly from the license management server, the DRM information processing module 202 verifies the validity of the digital license by verifying whether the format of the license and the used right description language are legal to ensure that the digital licenses to be stored into the TPM are all legal.

At step S303, the digital license is stored into the storage medium such as the TPM module 203 having a protected storage area.

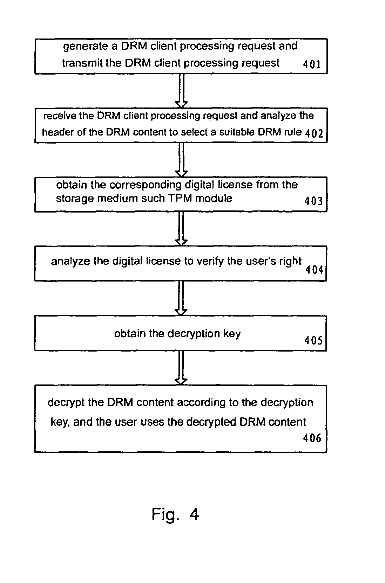

The process executed by the DRM client system 200 according to an embodiment of the invention is described below with reference to Fig.4. Fig.4 is a flowchart of the processing method of the DRM client system 200 according to the embodiment of the invention.

As shown in Fig.4, in the step S401, the application plug-in module 201a in Fig.2B is coupled with an external system, for receiving the digital content and the corresponding digital license from the external system, generating a DRM client processing request, and transmitting the generated DRM client processing request to the DRM information processing module 202a in Fig.2B. In addition, alternatively, according to the user's request, the application plug-in module 201a further determines whether the digital content to be used by the user is protected by the DRM, and if not, the user can directly use it, while skipping all the successive steps; and if the digital content is protected by the DRM, the application plug-in module 201a transmits the DRM client processing request to the DRM information processing module 202a, so as to use the DRM content, wherein the DRM client processing request includes the DRM content header. That is, the application plug-in module 201a transmits the DRM client processing request including the DRM content header and so on to the DRM information processing module 202a, and then the DRM information processing module 202a analyzes the format of the DRM content, the used encryption algorithm identifier and the content identifier ID from the data transmitted from the application plug-in module 201a to verify whether this kind of format and this kind of encryption algorithm are supported.

Next, in step S402, the DRM information processing module 202 receives the DRM client processing request from the application plug-in module 201. The DRM information analyzing unit 207 of the DRM information processing module 202, according to the DRM content header in the DRM client processing request, obtains the information regarding the used DRM rule, such as the format of the DRM, the DRM content identifier ID, the encryption algorithm used by the DRM content, from the DRM content header, and the DRM information analyzing unit 207 of the DRM information processing module 202 selects a proper DRM rule from the DRM rules database 204 according to these obtained information to perform various digital rights managements as various DRM client systems, and these information are all necessary in the following decryption process.

In step S403, the license searching and obtaining unit 206 obtains the corresponding digital license from the storage medium such as the TPM module 203 according to the user's DRM client processing request.

Since said DRM client processing request includes the DRM content header, the DRM information analyzing unit 207 can find identifier ID of the DRM content therein, so that the license searching unit 206 searches the corresponding digital license with the DRM content identifier ID. If the license searching unit 206 finds the corresponding digital license, it requests the storage medium (such as the TPM module 203) to obtain the digital license, and the digital license is transmitted to the DRM information processing module 202 by the storage medium. If it is not found, the user is notified of purchasing and downloading the digital license, and this operation exits. If the first operation occurs after the user pays the fee, the DRM client online downloads and stores the digital license.

In step S404, the DRM information analyzing unit 207 analyzes the digital, license obtained from the TPM module 203 to verify whether the user has the right to use the DRM content, wherein the DRM information analyzing unit 207 analyzes the related right and the identity information in the digital license so as to verify whether the user has the right to use the DRM content, wherein said verification normally includes: whether the digital license belongs to the user, whether the current use request of the user is included in the scope allowed by the digital license, and so on.

In step S405, after verifying that the user has the right for using the current DRM content, the DRM information analyzing unit 207 separates the decryption key from the digital license.

In step S406, the decryption control unit 208 decrypts the DRM content according to the decryption key so that the user uses the decrypted DRM content by using the application system, wherein the DRM content to be decrypted is transmitted from the application plug-in module 201 to the DRM information processing module 202. The DRM information analyzing unit 207 of the DRM information processing module 202 notifies the decryption control unit of the algorithm used in the encryption, and then the decryption control unit 208 performs the decryption and presents the decrypted digital content to the user. Alternatively, in the case where the storage medium is the TPM module, instead of the decryption control unit 208, the DRM information analyzing unit 207 notifies the TPM module 203 of the algorithm used in the encryption, and then the content to be decrypted and the decryption key are transmitted to the TPM module 203 to perform the decryption. In this case, the TPM module 203 transmits the decrypted content to the DRM information processing module 202, the DRM information processing module 202 forwards the decrypted content to the application system, and then the user can use the decrypted DRM content.

Further, according to another embodiment of the invention, as an alternative, in step S401, the application plug-in module 201b in Fig.2C can replace the application plug-in module 201a in Fig.2B, to apply for and receive the digital license only from the digital license management server, and apply for and receive the DRM header information of the protected digital file only from the content server and generate the DRM client processing request, without applying for and receiving the protected digital file itself.

And in step S402, the DRM information processing module 202b in Fig.2C can directly apply for and receive the protected digital file from the content server by itself. In this case, after processing the received data, the DRM information processing module 202b does not need to return the process result to the application plug-in module 201b, but directly decrypts the protected digital content according to the process result, and transmits it to the corresponding application system for use.

In addition, according to a further embodiment of the invention, as an alternative, in step S401, the application plug-in module 201c in Fig.3C can be used to apply for and receive the DRM header information of the protected digital file only from the content server, and generate the DRM client processing request.

In step S402, the DRM information processing module 202 directly applies for and receives the digital file from the content server, and applies for and receives the digital license from the digital license management server by itself. In this case, the application plug-in module 201 transmits the DRM client processing request including the DRM header information of the protected digital file to the DRM information processing module 202 according to the demand. After processing the received data, the DRM information processing module 202 does not need return the process result to the application plug-in module 201, but directly decrypts the protected digital content according to the process result, and transmits it to the corresponding application system for use.

By the way, since the above decryption process belongs to the well-known decryption process, and the structure and the function of the TPM module 203 are also well-known to the person skilled in the art, and thus the particular description of the structure and the function is omitted here.

The example of the application system integrated with the DRM client system according to the invention will be described below. Fig.5 is a schematic diagram for integrating the invention with the application system. As shown in Fig.5, modules 501, 502,..., 50n are the schematic diagrams after the application plug-in module 201 is integrated with the application systems 1 to n. For different application system, only different application plug-ins need to be developed. The DRM client processing interface is embedded into the application system through the application plug-in module 201 to make the application system have the DRM processing capability with the help of the background DRM information processing module 202 and the storage medium such as the TPM module 203. The DRM information processing module 202 and the application plug-in module 201 coordinate with each other to realize the right protection processing of the system, communicates with the storage medium such as the TPM processing unit module 203, analyze the content header of the DRM-protected content, and determine the information such as the used DRM standard, the used DRM format, the DRM content identifier ID, the encryption algorithm identifier, and the DRM information processing module 202 is responsible for analyzing the digital license and verifying the user's right, and obtaining the decryption key and so on.

It should be noted that all the application systems use the same one DRM information processing module 202 which provides a unified processing interface and function for all the DRM systems and can support all the DRM systems, thereby having a university. And the TPM module 203 is a trusted module implemented according to the TCG1.2 and the above standards, which executes the safe storage of the license and the data decryption operations and so on. According to the TCG standard, the module has a protected storage area inside for storing licenses; while the TPM module contains many encryption and decryption algorithms and supports the encryption and the decryption functions based on the standard algorithms and the encryption and the decryption functions of the customized encryption and the decryption algorithms. By using the TPM security module, the safe storage of the licenses can be realized and the security of the decryption process can be ensured.

The example for integrating the DRM client system of the invention with the external system to form a DRM system will be described below. Fig.6 is a structural diagram for integrating the inventive concept of the invention with the external system. As shown in Fig.6, the digital content server 601 is responsible for distributing the DRM-protected digital content. A license management server 602 is responsible for the generation, the management, and the distribution work of the digital license. The DRM client system 200 completes the functions of applying for the license, obtaining the license, decrypting the DRM digital content, using the digital content, and so on.An e-business system 603 is responsible for charging users for fees and then notifying the license management server to generate a digital license for the user who has been charged so as to protect the benefit of the copyright owner and the user.

In the integrated system, the user may firstly selects an interested DRM content and then transmits a request to the digital content server 601, and upon receiving the user's request, the digital content server 601 transmits the protected digital content to the user. The user needs the corresponding digital license while playing the protected digital content. Firstly the DRM client system 200 checks whether there is locally stored any effective digital license, and if not, the DRM client system 200 transmits a license request to the license management server 602, then the user pays the e-business system 603 the required fee for the license, and after the user pays the fee, the e-business system notifies the license management server 602 to generate the corresponding digital license for the user and deliver it to the DRM client system 200 in a safe way. Then, the user can use the DRM content through the DRM client system 200.

The above examples are only the preferred embodiments of the invention, but are not used to limit the invention. Any modification, equivalent alternation, improvement and so on within the spirit and the principle of the invention should be included in the protecting scope of the invention. In addition, the invention can be applied to Chinese TCM standard.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A DRM client system, comprising:
at least one application plug-in module, for generating a DRM client processing request according to a user's request or an external application system's request; and
a DRM information, processing module for receiving digital data and decrypting the received digital data, in response to the DRM client processing request from the application plug-in module,
wherein the DRM information processing module determines and selects a DRM rule to be adopted according to the contents of the DRM client processing request and the digital data and executes a corresponding decryption operation on the digital data according to the selected DRM rules.

2. The DRM client system according to the claim 1, wherein the application plug-in module is operated independently of the DRM information processing module and capable of coupling to various external systems to enable the interaction between the external systems and the DRM information processing module.

3. The DRM client system according to the claim 1, further comprising a storage medium for storing the digital data which includes digital licenses and digital files, wherein DRM information processing module comprises:
a DRM rule database which stores at least one DRM rule and information corresponding to the DRM rules;
a digital license storage unit for importing the digital licenses into the storage medium to be stored therein;
a digital license searching and obtaining unit for searching whether the current user has obtained the corresponding license and obtaining the searched license from the storage medium;
a DRM information analyzing unit for receiving the digital licenses and the digital files in response to the DRM client processing request and analyzing the digital licenses and the digital files according to the DRM client processing request, so as to select at least one DRM rule to implement at least one DRM client system based on the result of the analysis; and
a decryption control unit for determining successive operations according to the DRM client processing request and the analysis result from the DRM information analyzing unit.

4. The DRM client system according to the claim 1, wherein the DRM client processing request includes information of a DRM content header.

5. The DRM client system according to the claim 4, wherein, the application plug-in module applies for and receives the digital data according to the user's request, and transmits the received digital data to a DRM information processing module.

6. The DRM client system according to the claim 4, wherein, the digital data includes digital licenses and digital files, and the application plug-in module applies for and receives the digital licenses according to the user's request, and transmits the received digital licenses to a DRM information processing module.

7. The DRM client system according to any one of the claims 1 to 6, wherein the storage medium includes a TPM module for executing decryption operation.

8. The DRM client system according to the claim 7, wherein the TPM module comprises:
a protected storage unit for safe storage of the digital license; and
a decryption unit for selecting a supported decryption algorithm according to the specific DRM client processing request and the selected DRM rules to execute the decryption operation.

9. A method for DRM client, comprising steps of:
generating a DRM client processing request according to a user's request or an external application system's request; and
receiving the digital data and decrypting the received digital data in response to the DRM client processing request,
wherein DRM rules to be adopted are determined and selected according to the contents of the DRM client processing request and the digital data and the corresponding decryption operation on the digital data is executed according to the selected DRM rules.

10. The method for DRM client according to the claim 9, wherein the DRM client processing request includes information of a DRM content header.

11. The method for DRM client according to the claim 10, wherein the digital data includes digital licenses and digital files, and wherein selecting various DRM rules to be adopted comprises analyzing information of the DRM content header included in the DRM client processing request, obtaining from the information of the DRM content header a format of the DRM, an ID of the DRM, and a format information adopted by the content, and selecting the corresponding DRM rules according to the obtained format of the DRM, the ID of the DRM, and the format information adopted by the content.

12. The method for DRM client according to any one of claims 9 to 11, further comprising storing the digital data into a storage medium which includes a TPM module, and executing the decryption operation by the TPM module.

13. The method for DRM client according to the claim 12, further comprising:
storing a digital license into protected storage unit of the TPM module; and
selecting a supported decryption algorithm according to the specific DRM client processing request and the selected DRM rules to execute the decryption operation.

14. A DRM system which applies a DRM client system, comprising:
a digital content server for distributing a digital DRM-protected content;
a license management server for managing and providing digital licenses;
an e-business system for charging users for fees and notifying the license management server to generate the digital license for the user who has been charged; and
a DRM client system for executing a DRM client management,
wherein the DRM client system comprises:
at least one application plug-in module, for generating a DRM client processing request according to a user's request or an external application system's request; and
a DRM information processing module for receiving digital data and decrypting the received digital data, in response to the DRM client processing request from the application plug-in module,
wherein the DRM information processing module determines and selects a DRM rule to be adopted according to the contents of the DRM client processing request and the digital data and executes a corresponding decryption operation on the digital data according to the selected DRM rules.
